# EUROPÄISCHE PATENTSCHRIFT

(11) **EP 3 751 542 B1**
(45) Veröffentlichungstag und Bekanntmachung des Hinweises auf die Patenterteilung: **21.07.2021**
(21) Anmeldenummer: 19179772.9
(22) Anmeldetag: 12.06.2019
(51) Int. Cl.: G09B 9/00, G09B 19/00, A63B 21/00, A63B 23/04, A63B 69/18, A63B 22/00

(54) **VORRICHTUNG ZUR SIMULATION EINES BEWEGUNGSABLAUFES EINES SKISPRINGERS**
DEVICE FOR SIMULATING THE MOVEMENT PATH OF A SKI JUMPER
DISPOSITIF DE SIMULATION D'UN DÉROULEMENT DE MOUVEMENT D'UN SAUTEUR À SKI

(43) Veröffentlichungstag der Anmeldung: 16.12.2020
(73) Patentinhaber: Greimel, Florian, 5201 Seekirchen (AT)
(72) Erfinder: Greimel, Florian, 5201 Seekirchen (AT)
(74) Vertreter: KLIMENT & HENHAPEL

(56) Entgegenhaltungen:
- WO-A1-2016/122097
- JP-U- 3 041 990
- KR-A- 20130 100 514
- KR-B1- 101 579 576

## Beschreibung

### GEBIET DER ERFINDUNG

Die Erfindung betrifft eine Vorrichtung zur Simulation eines Bewegungsablaufes eines Skispringers sowie ein Verfahren zur Simulation eines Bewegungsablaufes eines Skispringers.

### STAND DER TECHNIK

Bei der Sportart des Skispringens oder Skifliegens sind die Bewegungsabläufe während der unterschiedlichen Phasen eines Sprunges, nämlich Anfahrt, Absprung, Flugphase und Landung, jeweils sehr anspruchsvoll und spezifisch, insbesondere da je nach Phase unterschiedliche Kräfte auf den Skispringer wirken. Insbesondere bei der kritischen Phase des Absprunges, bei welcher der Skispringer sich am Ende des Anlaufes möglichst direkt von der Kante des Schanzentisches abstößt, ist für die nachfolgende Flugphase und die mögliche zu erreichende Weite entscheidend. Dabei wirkt eine durch die Beschleunigung während der Anfahrt und durch den bogenartigen Übergang von Anfahrtsrampe zu Schanzentisch bei der sogenannten Radius-Kompression ausgeübte Anpresskraft auf den Skispringer, der zum richtigen Zeitpunkt abspringen muss und sich danach in einer Flugposition stabilisieren muss. In der Regel ist es daher auch für die Erlernung bzw. für das Trainieren der Bewegungsabläufe unerlässlich, Skisprünge an entsprechenden Schanzen, gegebenenfalls gesichert, auszuführen, da eine Simulation des Bewegungsablaufes und der Kräftesituation abseits der Schanze nicht möglich ist, da sich bekannte Simulatoren größten Teils auf die virtuelle Darstellung eines Skisprunges beschränken, ohne dass dabei die tatsächlich auftretenden Kräfteverhältnisse berücksichtigt werden. Auch die Simulation der Anfahrt auf einer schrägen Ebene vermag die Kräfteverhältnisse nicht nachzubilden.

JP 3041990 U offenbart eine Vorrichtung zur Simulation eines Skisprungs, welche eine Schalenstruktur, einen Spannrahmen, eine teleskopierbare Kontraktions-/Ausdehnungsvorrichtung, ein Display, einen Vibrationsaktuator, eine Kippvorrichtung sowie ein Gleitelement umfasst. Der Spannrahmen wird durch einen oberen Rahmen, durch einen unteren Rahmen sowie durch einen Zwischenrahmen gebildet, welcher den oberen Rahmen mit dem unteren Rahmen derart verbindet, sodass diese teleskopierbar sind.

WO 2016/122097 A1 bezieht auf einen Skisprungsimulator umfassend ein Basiselement, ein Tragelement, ein bewegliches Element, das auf dem Tragelement angeordnet ist, um auf dem beweglichen Element platzierte Ski eines Benutzers zu bewegen, eine Kippantriebseinheit, die das Tragelement bezogen zum Basiselement kippt, und ein Hebeelement, das ausgelegt ist, den Benutzer nach oben zu ziehen und zu stabilisieren.

KR 101579576 B1 beschreibt eine Skisprungsimulationsvorrichtung umfassend ein Anfahrtselement zur Simulation der Anfahrt auf der Anfahrtsrampe und ein Flugelement zur Simulation des Absprungs, der Flugphase und der Landung. Das Anfahrtselement umfasst eine Platte deren Neigung einstellbar ist, während das Flugelement eine Laufeinheit und Zugmittel umfasst.

KR 20130100514 A offenbart einen Skisprungsimulator umfassend eine Basis, ein Tragelement, Stellelemente, die die Neigung des Tragelements bezogen auf die Basis variieren, ein Gurtelement, Zugmittel, die mit dem Gurtelement verbunden sind und einen Benutzer während der Flugphase tragen, sowie Regelmotoren.

### AUFGABE DER ERFINDUNG

Es ist daher eine Aufgabe der Erfindung die Nachteile des Stands der Technik zu überwinden und eine Vorrichtung sowie ein Verfahren zur Simulation eines Bewegungsablaufes eines Skispringers, insbesondere während der Anfahrt, des Absprungs und zumindest des Beginns der Flugphase, vorzuschlagen, welche eine realitätsnahe Simulation der auf eine Person wirkenden Kräfte ermöglicht und so ein Erlernen der Bewegungsabläufe abseits einer echten Sprungschanze ermöglicht.

### DARSTELLUNG DER ERFINDUNG

Diese Aufgabe wird bei einer Vorrichtung zur Simulation eines Bewegungsablaufes eines Skispringers umfassend
- eine mittels einer Antriebseinheit in einer Höhenrichtung verfahrbare Plattform zur Aufnahme einer Person;
- eine Anpresseinrichtung, welche ausgebildet ist, um eine in Richtung der Plattform wirkende Anpresskraft auf eine auf der Plattform befindliche Person auszuüben;
- eine Stabilisierungseinrichtung, welche ausgebildet ist, um eine der Anpresskraft entgegen wirkende Stabilisierungskraft auf die auf der Plattform befindliche Person auszuüben; erfindungsgemäß dadurch gelöst, dass
die Anpresseinrichtung zumindest ein erstes Zugmittel zur Ausübung der Anpresskraft sowie eine Spanneinrichtung für das zumindest eine erste Zugmittel umfasst, wobei Antriebseinheit und Anpresseinrichtung derart zusammenwirken,
- sodass während eines Simulationsvorganges die Plattform mittels der Antriebseinheit in Richtung der Höhenrichtung beschleunigt wird, wobei die von der Anpresseinrichtung ausgeübte Anpresskraft während der Bewegung der Plattform in Richtung der Höhenrichtung über einen Lösemechanismus zumindest verringert wird, wobei der Lösemechanismus ausgebildet ist, um mit dem zumindest einen ersten Zugmittel und/oder mit der Spanneinrichtung derart zusammenzuwirken, dass bei Betätigung des Lösemechanismus eine Spannkraft des ersten Zugmittels verringert wird,
- und sodass nach der Verringerung der Anpresskraft die Person durch die Stabilisierungseinrichtung in einer stabilen Lage gehalten wird.

Dadurch, dass die Plattform mittels der Antriebseinheit in Höhenrichtung bewegbar und beschleunigbar ist, kann eine Beschleunigungskraft und/oder eine Trägheitskraft auf die Plattform ausgeübt werden. Um jedoch die während der Anfahrt und der Radius-Kompression auf einen Skispringer wirkende Anpresskraft simulieren zu können, ist die Anpresseinrichtung vorgesehen, die während der Beschleunigung die Anpresskraft auf die Person ausüben kann und so die Kraft von der Plattform auf die Person überträgt. In anderen Worten dient die Anpresseinrichtung zur Ausübung der Anpresskraft als Gegenkraft zu der auf die Plattform wirkenden Beschleunigungs- bzw. Trägheitskraft. So ist es beispielsweise denkbar, dass die Anpresseinrichtung ausgebildet ist, um eine Bewegung der auf der Plattform befindlichen Person in Höhenrichtung zu verhindern oder zumindest der Bewegung entgegenzuwirken. Entsprechend ist die Anpresseinrichtung ausgebildet, um eine in Richtung der Plattform wirkende Anpresskraft auf die auf der Plattform befindliche Person auszuüben.

Die Beschleunigung bzw. Bewegung der Plattform in Höhenrichtung wird durch eine entsprechende Antriebseinheit erreicht. Dabei handelt es sich vorzugsweise um eine elektrische Antriebseinheit wie einen Elektromotor, insbesondere einen Linearmotor. Es ist jedoch auch denkbar, dass die Antriebseinheit als pneumatische oder hydraulische Antriebseinheit ausgebildet ist. Vorteilhaft ist es dabei, wenn die Antriebseinheit Beschleunigungen von bis zu zwischen 0,1 und 1,5 m/s², insbesondere zwischen 0,5 und 1,2 m/s², vorzugsweise 1 m/s² mit einer Abweichung von bis zu 15%, ermöglicht. Es ist jedoch grundsätzlich auch denkbar, dass die Antriebseinheit mechanisch ausgebildet ist und beispielsweise ein gespanntes Federelement umfasst.

Um den Bewegungsablauf während des Absprungs simulieren zu können, ist es jedoch notwendig, die mittels der Anpresseinrichtung auf die sich auf der Plattform befindliche Person ausgeübte Anpresskraft während eines Simulationsvorganges, während welchem die Plattform in Höhenrichtung bewegt und/oder beschleunigt wird, zumindest zu verringern oder aufzuheben, sodass die Person eine Sprungbewegung durchführen kann. Es versteht sich dabei von selbst, dass die Aufhebung der Anpresskraft einen Extremfall der Verringerung darstellt. Zur Ermöglichung der Simulation eines Absprunges ist daher ein Lösemechanismus vorgesehen, mittels welchem während der durch die Antriebseinheit bedingten Bewegung der Plattform in Höhenrichtung die durch die Anpresseinrichtung ausgeübte Anpresskraft zumindest verringert wird. So kann beispielsweise auch bei ausreichender Verringerung der Anpresskraft ein Abheben der Person von der Plattform erreicht werden, insbesondere wenn die Plattform in der Bewegung gestoppt wird und sich die Person aufgrund der Trägheitskräfte weiter in Höhenrichtung bewegt.

Ein solcher Lösemechanismus kann beispielsweise die Bewegung von bewegbaren Elementen der Anpresseinrichtung sperren bzw. freigeben oder die Spannung von Zugmitteln der Anpresseinrichtung verringern, um die Anpresskraft zumindest zu verringern.

Der Lösemechanismus kann beispielsweise automatisch oder von Hand durch eine Aufsichtsperson ausgelöst werden.

Um zumindest den Beginn der Flugphase simulieren zu können, ist eine Stabilisierungseinrichtung vorgesehen, welche ausgebildet ist, um zumindest während eines Simulationsvorganges eine der Anpresskraft entgegenwirkende Stabilisierungskraft auf die Person auszuüben. Weiters ist die Stabilisierungseinrichtung ausgebildet, um die Person während des Simulationsvorganges nach der zumindest Verringerung bzw. der Aufhebung der durch die Anpresseinrichtung ausgeübten Anpresskraft zu fixieren und in einer stabilen Lage zu halten. Bevorzugt ist die Stabilisierungseinrichtung derart ausgebildet, dass die Person von der Stabilisierungseinrichtung getragen wird, ohne dass sich die Person auf der Plattform abstützt, um eine möglichst gute Simulation der Flugphase zu ermöglichen.

Gleichzeitig können Anpresseinrichtung und Stabilisierungseinrichtung auch zur Einstellung einer Kraftsituation in einer Ausgangsstellung der Plattform beim Beginn eines Simulationsvorganges verwendet werden indem Anpresskraft und Stabilisierungskraft richtungs- und betragsmäßig aufeinander abgestimmt werden.

Entsprechend ist es mittels der erfindungsgemäßen Vorrichtung möglich den Bewegungsablauf eines Skispringers und die Kräfteverhältnisse der während des Skisprunges auf den Skispringer wirkenden Kräfte zu simulieren, indem eine Person mittels der von der Antriebseinheit angetriebenen Plattform in Höhenrichtung bewegt bzw. beschleunigt wird und die in den unterschiedlichen Phasen des Skisprunges, insbesondere Anfahrt, Radius-Kompression, Absprung und Beginn der Flugphase, auf die Person wirkenden Kräfte durch das Zusammenspiel von Antriebseinheit, Anpresseinheit, Stabilisierungseinheit und Lösemechanismus nachgebildet sind. Somit wird mittels der erfindungsgemäßen Vorrichtung eine realitätsnahe Simulation des Bewegungsablaufes eines Skispringers in der Art eines Trockentrainings ermöglicht, ohne dass der Skisprung auf einer Schanze ausgeführt werden muss. So kann beispielsweise der Bewegungsablauf von ungeübten Personen erlernt werden bevor sich diese den Gefahren einer echten Schanze aussetzen müssen. Gleichfalls kann die Vorrichtung auch von geübten Skispringern benützt werden, um die Bewegungsabläufe zu verbessern und unterschiedliche Belastungen unter verschiedenen äußeren Umständen zu trainieren.

Die Anpresseinrichtung umfasst zumindest ein erstes Zugmittel zur Ausübung der Anpresskraft sowie eine Spanneinrichtung für das zumindest eine erste Zugmittel. Die Kombination eines Zugmittels mit einer Spanneinrichtung stellt eine besonders einfache Möglichkeit dar, um eine betragsmäßig anpassbare Anpresskraft auf die Person auszuüben. So kann das mit der Person verbundene Zugmittel mittels der Spanneinrichtung gespannt werden, um die Person in Richtung der Plattform zu ziehen und so die Anpresskraft auszuüben bzw. vor dem Start des Simulationsvorganges einstellen zu können. Beispielsweise kann die Spanneinrichtung als Seilwinde oder Seiltrommel ausgebildet sein.

Durch die Spanneinrichtung bzw. die Zugmittel kann beispielsweise auch während des Simulationsvorganges die auf die Person wirkende Anpresskraft erhöht werden, indem die Zugmittel eine andere Bewegung durchlaufen als die Plattform. So können die Zugmittel etwa konstant gehalten werden, sodass die Person bei der Bewegung in Höhenrichtung in eine tiefere Knieposition gedrückt wird.

Die Verwendung von zumindest einem ersten Zugmittel, beispielsweise von Seilen oder Gurten, und einer mit dem zumindest einen ersten Zugmittel zusammenwirkenden Spanneinrichtung in der Anpresseinrichtung ermöglicht auch eine kinematische einfache Gestaltung des Lösemechanismus, welche vorzugsweise ohne komplexe elektronische Steuerungsgeräte auskommt. Der Lösemechanismus ist ausgebildet, um mit dem zumindest einen ersten Zugmittel und/oder mit der Spanneinrichtung derart zusammenzuwirken, dass bei Betätigung des Lösemechanismus eine Spannkraft des ersten Zugmittels verringert wird. Dadurch, dass der Lösemechanismus ausschließlich mit zumindest einem der Elemente der Anpresseinrichtung zusammenwirkt, wird die Fehleranfälligkeit reduziert und die Kinematik vereinfacht. So ist es beispielsweise denkbar, dass bei der Betätigung des Lösemechanismus die Spanneinrichtung freigegeben wird und dadurch die Anpresskraft reduziert bzw. aufgehoben wird, da das zumindest eine erste Zugmittel nicht mehr bzw. weniger stark gespannt wird. Auch wäre es denkbar, dass das zumindest eine erste Zugmittel mittels eines schlittenartigen Auslöseelements und entsprechender Umlenkrollen ausgelenkt wird und bei Betätigung des Lösemechanismus die Auslenkung reduziert wird, sodass das erste Zugmittel nachgibt und die Anpresskraft reduziert bzw. aufgehoben wird, da das zumindest eine erste Zugmittel nicht mehr bzw. weniger stark gespannt ist.

Um den Bewegungsablauf eines echten Skisprungs noch besser simulieren zu können und die wirkenden Kräfte kurz vor und während des Absprunges möglichst realitätsnah nachbilden zu können, ist in einer Ausführungsvariante der Erfindung vorgesehen, dass Anpresseinrichtung und Lösemechanismus derart ausgebildet sind, dass eine Zeitdauer zwischen einem Startzeitpunkt des Simulationsvorgangs und einem Auslösezeitpunkt des Simulationsvorganges, an welchem Auslösezeitpunkt die von der Anpresseinrichtung ausgeübte Anpresskraft über den Lösemechanismus zumindest verringert wird, einstellbar ist. Durch die Einstellbarkeit der Zeitdauer zwischen Beginn des Simulationsvorganges am Startzeitpunkt und dem Auslösezeitpunkt an dem der Lösemechanismus ausgelöst wird können die Kraftverhältnisse vor und während des simulierten Absprunges gezielt eingestellt und angepasst werden. So kann beispielsweise eine fixe Zeitdauer eingestellt bzw. vordefiniert werden, die in Abhängigkeit des Beschleunigungsvorganges der Plattform den Absprungzeitpunkt definiert.

Vorteilhaft kann es dabei sein, wenn auch die Bewegung bzw. Beschleunigung der Plattform während eines Simulationsvorganges in Abhängigkeit der verstrichenen Zeit variiert werden kann bzw. an Hand eines vorgegebenen Ablaufdiagramms variiert wird und die Zeitdauer bis zum Auslösezeitpunkt entsprechend angepasst wird.

In einer weiteren Ausführungsvariante der Erfindung ist vorgesehen, dass die Vorrichtung ein Führungsgerüst aufweist, wobei die Plattform in dem Führungsgerüst verschiebbar gelagert ist und vorzugsweise die Antriebseinheit in dem Führungsgerüst verbaut ist. Das Führungsgerüst dient dabei einerseits zur Sicherung und Abstützung der auf der Plattform befindlichen Person, wobei das Führungsgerüst vorzugsweise über entsprechende Verankerungsmittel im Untergrund, beispielsweise am Boden, verankert ist, um ein Umkippen oder Verschieben der Vorrichtung zu verhindern. Andererseits dient das Führungsgerüst als Führung für die Plattform selbst, um die Plattform während der Bewegung in Höhenrichtung positionsstabil zu halten und kann zu diesem Zweck beispielsweise Führungsschienen umfassen. Eine besonders kompakte und platzsparende Bauweise wird dadurch erreicht, dass auch die Antriebseinheit im Führungsgerüst verbaut und in vorteilhafter Weise durch das Führungsgerüst abgedeckt ist.

Zur Erhöhung des Komforts bei der Benutzung der Vorrichtung und zur gezielten Ausübung der Kräfte auf die Person ist in einer weiteren Ausführungsvariante der Erfindung vorgesehen, dass die Vorrichtung ein von der auf der Plattform befindlichen Person anlegbares Gurtsystem umfasst, wobei das Gurtsystem mit der Anpresseinrichtung und/oder der Stabilisierungseinrichtung verbunden ist, um die Anpresskraft und/oder die Stabilisierungskraft auf die auf der Plattform befindliche Person zu übertragen. Durch das Gurtsystem, das beispielsweise zumindest am Torso der Person befestigbar ist, kann die Vorrichtung einerseits in einfacher Art und Weise an die körperlichen Gegebenheiten der Person angepasst werden, insbesondere wenn das Gurtsystem variabel fixierbare Gurte umfasst. Andererseits lassen sich Anpresseinrichtung und Stabilisierungseinrichtung über entsprechende Verbindungsmittel einfach mit dem Gurtsystem verbinden, um die entsprechenden Kräfte direkt auf die Person ausüben zu können. So kann das Gurtsystem zum Beispiel in einem Rückenabschnitt einen oder mehrere Befestigungspunkte, insbesondere Ösen, zur Anbindung der Stabilisierungseinrichtung und/oder in einem Bauchabschnitt einen oder mehrere Befestigungspunkte, insbesondere Ösen oder Umlenkrollen, für die Anbindung der Anpresseinrichtung aufweisen.

Als besonders vorteilhaft hat es sich herausgestellt, wenn der Lösemechanismus ein betätigbares Auslöseelement umfasst, über welches das zumindest eine erste Zugmittel ausgelenkt ist, indem das Auslöseelement in einer Querrichtung von der Spanneinrichtung beabstandet ist. Das zumindest eine erste Zugmittel ist dabei über ein am Auslöseelement angebrachtes Umlenkelement geführt, um die Spannbarkeit zu gewährleisten. Das Auslöseelement ist derart ausgebildet, dass bei Betätigung des Auslöseelements das zumindest eine erste Zugmittel oder das Umlenkelement freigegeben wird. Durch das Freigeben des ersten Zugmittels oder des Umlenkelements wird die Auslenkung des Zugmittels verringert, sodass durch den freigegebenen Abschnitt des ersten Zugmittels die Spannung des Zugmittels zumindest zeitweise reduziert bzw. aufgehoben wird. Daher sieht eine weitere bevorzugte Ausführungsvariante der Erfindung vor, dass der Lösemechanismus ein in einer Richtung quer, vorzugsweise normal, zur Höhenrichtung ausgerichteten Querrichtung von der Spanneinrichtung beabstandetes betätigbares Auslöseelement umfasst, wobei das Auslöseelement ein Umlenkelement für das zumindest eine erste Zugmittel aufweist und ausgebildet ist, um bei Betätigung des Auslöseelements das Umlenkelement oder das zumindest eine erste Zugmittel freizugeben. Vorzugsweise ist das Umlenkelement als Umlenkrolle ausgebildet.

Das Freigeben des Umlenkelements kann dabei beispielsweise über das Lösen eines Befestigungsmechanismus eines durch das Umlenkelement geführten Halteelements, wie einem Befestigungsbolzen, erreicht werden.

Alternativ ist es denkbar, dass das Freigeben des Umlenkelements bewerkstelligt wird, indem das Auslöseelement schlittenartig ausgebildet ist und die Bewegung des Auslöseelements in Querrichtung durch die Betätigung des Auslöseelements freigegeben wird, sodass das Auslöseelement mitsamt dem daran befestigten Umlenkelement sich in Richtung der Spanneinheit bewegt. Zur Rückstellung des schlittenartigen Auslöseelements kann ein Rückstellmechanismus vorgesehen sein, beispielsweise ein Zahnradsystem oder ein Riemenantrieb.

Das Freigeben des Spannmittels kann beispielsweise dadurch erreicht werden, dass das Umlenkelement zweiteilig ausgebildet ist und sich bei der Betätigung öffnet.

In einer weiteren Ausführungsvariante der erfindungsgemäßen Vorrichtung ist vorgesehen, dass die Stabilisierungseinrichtung eine von der Plattform in Höhenrichtung beabstandete Stabilisierungsplatte sowie zumindest ein an der Stabilisierungsplatte befestigbares zweites Zugmittel zur Ausübung der Stabilisierungskraft umfasst. Um die Stabilisierungsplatte an der Vorrichtung zu befestigen, kann das Führungsgestell beispielsweise vertikale Abstandselemente umfassen, von welchen die Stabilisierungsplatte getragen wird. Es ist aber auch denkbar, dass die Stabilisierungsplatte über entsprechende Verankerungsmittel an einer Oberfläche, wie beispielsweise einer Decke jenes Raumes, in dem die Vorrichtung aufgebaut ist, befestigt werden, sodass keine direkte Verbindung zwischen Stabilisierungsplatte und Führungsgestell bzw. Plattform besteht.

Vorzugsweise sind mehrere zweite Zugmittel vorgesehen, insbesondere zumindest zwei, drei oder vier zweite Zugmittel. Durch die Mehrzahl an zweiten Zugmitteln kann in einfacher Art und Weise die Stabilisierungskraft auf die Person ausgeübt werden, da die Stabilisierungseinrichtung in der Betriebsposition oberhalb der Person und der Plattform angeordnet ist und die zweiten Zugmittel einfach an der Person anbringbar sind. Auch lassen sich mittels der, insbesondere flexibel ausgebildeten, bevorzugt als elastische Seile oder Expander ausgebildeten, zweiten Zugmittel in einfacher Art und Weise die betragsmäßigen Größen der wirkenden Komponenten der Stabilisierungskraft einstellen. Grundsätzlich ist jedoch auch ein einziges zweites Zugmittel ausreichend, um die Stabilisierungskraft auszuüben.

Während es denkbar ist, dass ein oder mehrere zweite Zugmittel vorgesehen ist, welches vorzugsweise in der Sagittalebene der Person befestigt werden, ist es vorteilhaft, wenn zumindest ein Teil der zweiten Zugmittel paarweise symmetrisch zur Sagittalebene an der Person befestigt werden, um auch Kraftkomponenten in der Querrichtung simulieren zu können.

Um die Richtung der Stabilisierungskraft einfach und schnell anpassen zu können und dadurch verschiedene Trainingsszenarien nachbilden zu können, etwa um verschiedene Seiten-, Rücken- oder Aufwindverhältnisse nachstellen zu können, sodass die notwendigen Bewegungsabläufe zur Stabilisierung der entsprechenden Körperhaltung von der Person mittels der Vorrichtung trainiert werden können, sieht eine weitere Ausführungsvariante der Erfindung vor, dass die Stabilisierungsplatte eine Vielzahl von in Bezug auf die Plattform zueinander versetzten Befestigungspunkten zur Anbindung des zumindest einen zweiten Zugmittels aufweist. Durch die Vielzahl an unterschiedlichen Befestigungspunkten, die vorzugsweise in Querrichtung sowie in einer Längsrichtung, welche mit Höhenrichtung und Querrichtung ein orthogonales Koordinatensystem bildet, gegeneinander versetzt sind, kann mittels entsprechender Auswahl des Befestigungspunktes die Simulation besonders einfach, beispielswiese mit wenigen Handgriffen, angepasst werden. Es versteht sich dabei von selbst, dass obwohl die Wahl des Befestigungspunktes einen entscheidenden Einfluss auf die Richtungskomponenten der Stabilisierungskraft hat, auch die entsprechende Wahl des zumindest einen zweiten Zugmittels, etwa mit höherer oder niedriger Elastizität, einen Einfluss auf die betragsmäßige Größe der Stabilisierungskraft hat.

Besonders vorteilhaft ist es, wenn die Stabilisierungsplatte als Gitterplatte, vorzugsweise aus einem metallischen Werkstoff wie Stahl, ausgebildet ist, da eine solche Gitterplatte einerseits kostengünstig in der Anschaffung ist und andererseits ohne aufwändige Bearbeitung eine Vielzahl an Befestigungspunkten für das zumindest eine zweite Zugmittel, vorzugsweise für die Mehrzahl an zweiten Zugmitteln, zur Verfügung stellt.

Eine weitere Ausführungsvariante der erfindungsgemäßen Vorrichtung sieht vor, dass die Anpresseinrichtung und die Stabilisierungseinrichtung derart einstellbar sind, dass in einer Ausgangsstellung der Plattform zumindest die parallel zur Höhenrichtung ausgerichteten Kraftkomponenten von Anpresskraft und Stabilisierungskraft im Wesentlichen ausgeglichen werden. Der Ausgleich zumindest der parallel zur Höhenrichtung ausgerichteten Kraftkomponenten von Anpresskraft und Stabilisierungskraft ermöglicht es, für die auf der Plattform befindliche Person in der Ausgangsstellung, aus welcher der Simulationsvorgang gestartet wird, Kraftverhältnisse einzustellen, welche denen auf einer Schanze entsprechen. Somit wird die Person in der Ausgangsstellung weder durch die Anpresskraft in Richtung der Plattform gezogen noch mittels der Stabilisierungskraft in die der Plattform abgewandte Richtung. Es versteht sich dabei von selbst, dass auch die auf der Plattform befindliche Person eine entsprechende Körperhaltung, insbesondere eine skisprungspezifische Anfahrtsposition, einnehmen muss, bevor die Kraftkomponenten von Anpresskraft und Stabilisierungskraft ausgeglichen werden können.

In einfacher Art und Weise lässt sich ein solcher Kraftausgleich beispielsweise in einer Vorrichtung erreichen, in welcher die Anpresseinrichtung zumindest ein erstes Zugmittel und eine Spanneinrichtung umfasst und die Stabilisierungseinrichtung zumindest ein zweites Zugmittel und eine Stabilisierungsplatte umfasst, indem die Person zuerst mittels des zumindest einen zweiten Zugmittels, vorzugsweise mittels der Mehrzahl an zweiten Zugmitteln, an der Stabilisierungsplatte angebunden wird und nachfolgend die Spannung des zumindest einen ersten Zugmittels mittels der Spanneinrichtung erhöht wird, bis sich die Kraftkomponenten aufheben.

Zur weiteren Individualisierung der Trainingsbedingungen sieht eine weitere Ausführungsvariante der Erfindung vor, dass mittels der Plattform verschiedene Neigungswinkel einstellbar sind, um unterschiedliche Bewegungsabläufe zu simulieren. So kann beispielsweise die Plattform um die Querrichtung gekippt werden, um beispielsweise eine steilere Anfahrtsposition zu erreichen, oder um die Längsrichtung gekippt sein, um eine seitliche Ausgleichsbewegung zu trainieren. Es versteht sich dabei von selbst, dass die unterschiedlichen Neigungen auch durch auf der Plattform befestigbare Aufsätze einstellbar sein können, um die Kinematik der Plattform einfach zu halten.

Gemäß einer weiteren Ausführungsvariante der erfindungsgemäßen Vorrichtung ist vorgesehen, dass die Vorrichtung eine Steuereinrichtung zur Steuerung der Antriebseinheit und/oder des Lösemechanismus aufweist. In der Steuereinrichtung können beispielsweise mehrere unterschiedliche Programme abgespeichert sein, welche Bewegungsabläufe der Plattform und/oder unterschiedliche Zeitspannen für die Betätigung des Lösemechanismus enthalten. Wenn die Steuereinrichtung sowohl Antriebseinheit als auch Lösemechanismus steuert, kann der gesamte Ablauf des Simulationsvorganges mittels der Steuereinrichtung gesteuert werden. Dabei ist es sowohl denkbar, dass die Steuereinrichtung den Simulationsvorgang automatisch durchläuft, wenn ein entsprechendes Programm gewählt ist, oder dass mittels eines Schaltpaneels manuelle Eingaben erforderlich sind, wobei auch eine Kombination beider Varianten denkbar ist.

Um ein noch gezielteres Training zu ermöglichen, indem der trainierenden Person trainingsrelevante Informationen, beispielsweise über den optimalen Absprungzeitpunkt oder ein Feedback über die optimale Körperhaltung zum jeweiligen Zeitpunkt des Simulationsvorganges, anzeigen zu können, sieht eine weitere Ausführungsvariante der Erfindung vor, dass die Vorrichtung eine Anzeigeeinheit zur Anzeige von Informationen für die auf der Plattform befindliche Person aufweist, wobei die Anzeigeeinheit vorzugsweise mit der Steuereinrichtung verbunden ist. Bei der Anzeigeeinheit kann es sich beispielsweise um ein Display, einen Projektor oder einen Bildschirm handeln, wobei die Anzeigeeinheit an der Vorrichtung oder im Nahbereich der Vorrichtung im Sichtfeld der trainierenden Person angebracht ist. Vorzugsweise kann die Anzeigeeinheit als Virtual Reality Brille ausgebildet sein, um ein besonders immersives Trainingsumfeld zu schaffen. Wenn die Anzeigeeinheit mit der Steuerungseinrichtung gekoppelt ist, lässt sich durch die gemeinsame Steuerung des Simulationsvorganges der Informationsaustausch verbessern, sodass besonders genaue und auf den jeweiligen Simulationsvorgang angepasste Informationen von der Anzeigeeinheit angezeigt werden können. Es ist aber auch denkbar, dass die Anzeigeeinheit separat mit Informationen versorgt wird, beispielsweise wenn die Zeitspanne bis zum Auslösezeitpunkt konstant ist.

Die eingangs erwähnte Aufgabe wird auch gelöst durch ein Verfahren zur Simulation eines Bewegungsablaufes eines Skispringers, mittels einer Vorrichtung umfassend
- eine Plattform,
- eine Anpresseinrichtung,
- eine Stabilisierungseinrichtung und
- einen Lösemechanismus,
wobei die Anpresseinrichtung zumindest ein erstes Zugmittel und eine Spanneinrichtung umfasst, wobei mittels des Verfahrens folgende Schritte ausgeführt werden:
- Positionieren einer Person auf einer in einer Höhenrichtung verfahrbaren Plattform;
- Anbinden der Person an eine Anpresseinrichtung und eine Stabilisierungseinrichtung, wobei durch die Anpresseinrichtung eine in Richtung der Plattform wirkende Anpresskraft auf die Person ausgeübt wird und mittels der Stabilisierungseinrichtung eine der Anpresskraft entgegen wirkende Stabilisierungskraft auf die Person ausgeübt wird;
- Beschleunigen der Plattform in Richtung der Höhenrichtung;
- Verringern, vorzugsweise Lösen, der Anpresskraft, insbesondere zu einem definierten Zeitpunkt, während der Bewegung der Plattform in Richtung der Höhenrichtung durch Zusammenwirken des Lösemechanismus mit dem ersten Zugmittel und/oder mit der Spanneinrichtung, indem eine Spannkraft des ersten Zugmittels verringert wird;
- Stabilisieren der Person mittels der Stabilisierungseinrichtung.

Wie bereits im Vorfeld erörtert, lassen sich durch das beschriebene Simulationsverfahren die Bewegungsabläufe eines Skispringers mit den entsprechenden Kräfteverhältnissen simulieren. Dabei wird durch die Anpresskraft, die sich in der Regel während der Beschleunigung der Plattform in Höhenrichtung, sprich nach oben, erhöht, die Anfahrt und die Radius-Kompression simuliert, während durch das Verringern oder gegebenenfalls Lösen der Anpresskraft der Absprung vom Schanzentisch simuliert wird und die Stabilisierungseinrichtung schließlich zumindest den Beginn der Flugphase simuliert, indem die Person stabilisiert wird. Insbesondere von Vorteil ist es dabei, wenn die Person nach dem Auslösezeitpunkt, vorzugweise wenn die Plattform gestoppt wird, durch die Stabilisierungseinrichtung getragen wird und sich von der Plattform löst. Dabei kann die auf der Plattform befindliche Person während eines Simulationsvorganges die Einhaltung und Einnahme der jeweils notwendigen Körperhaltung trainieren, wobei die von außen auf die Person wirkenden Kräfte durch die Beschleunigungs- und Trägheitskräfte bzw. durch die Anpresskraft und Stabilisierungskraft möglichst realitätsnah nachgebildet werden. Es versteht sich dabei von selbst, dass in der Beschleunigungsphase keine konstant hohe Beschleunigung vorherrschen muss, sondern, dass die Beschleunigung je nach Zeitpunkt während des Simulationsvorganges unterschiedlich groß sein kann. Auch ist es denkbar, dass zwischen dem Startzeitpunkt und dem Auslösezeitpunkt die Plattform, in der Regel kurze, Phasen mit konstanter Geschwindigkeit durchläuft. Vorteilhaft ist es weiter, wenn die Plattform zeitnah nach dem Auslösezeitpunkt gestoppt oder zumindest gebremst wird, sodass sich die Person von der Plattform lösen kann.

Zur Durchführung des Verfahrens ist in einer besonders bevorzugten Ausführungsvariante vorgesehen, dass eine zuvor beschriebene erfindungsgemäße Vorrichtung verwendet wird. So lassen sich bei der Durchführung des Simulationsverfahrens die entsprechenden eingangs beschriebenen Effekte erreichen, sodass in diesem Zusammenhang auf die entsprechenden Passagen der Beschreibung verwiesen werden kann. Daher ist in einer besonders bevorzugten Ausführungsvariante vorgesehen, dass das Verfahren mittels einer Vorrichtung der eingangs beschriebenen Art ausgeführt wird.

### KURZE BESCHREIBUNG DER FIGUREN

Die Erfindung wird nun anhand eines Ausführungsbeispiels näher erläutert. Die Zeichnung ist beispielhaft und soll den Erfindungsgedanken zwar darlegen, ihn aber keinesfalls einengen oder gar abschließend wiedergeben.

Dabei zeigt:

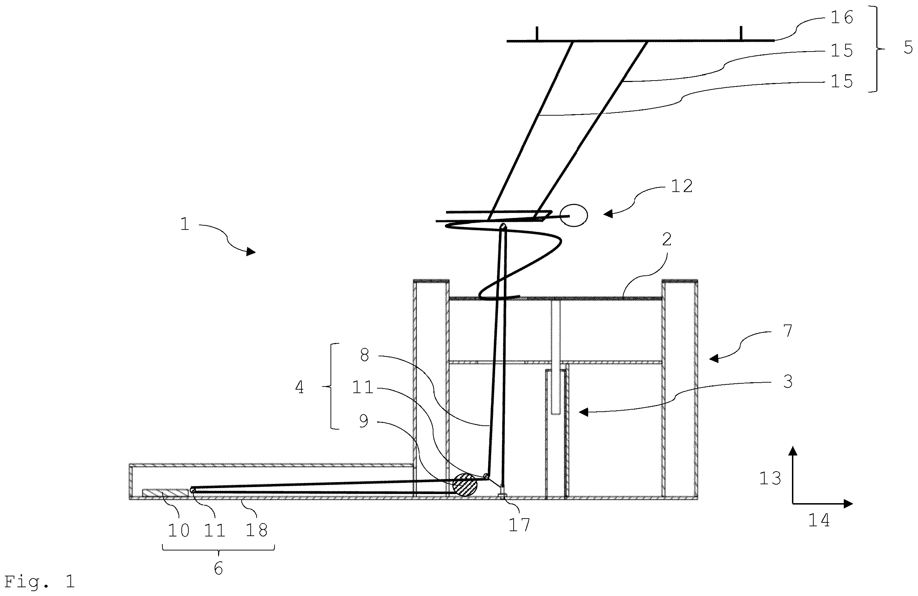

- Fig. 1: eine schematische Darstellung einer erfindungsgemäßen Simulationsvorrichtung.

### WEGE ZUR AUSFÜHRUNG DER ERFINDUNG

Fig. 1 zeigt eine erfindungsgemäße Vorrichtung 1 zur Simulation eines Bewegungsablaufes eines Skispringers. Dabei umfasst die Vorrichtung 1 eine Plattform 2, welche in einer Höhenrichtung 13, sprich in einer Betriebsposition nach oben, verfahrbar ist, eine Antriebseinheit 3, mittels welcher die Plattform 2 verfahrbar ist, sowie eine Anpresseinrichtung 4, eine Stabilisierungseinrichtung 5 und einen Lösemechanismus 6.

Im vorliegenden Ausführungsbeispiel umfasst die Vorrichtung 1 weiters ein Führungsgerüst 7, in welchem die Plattform 2 mittels mehrerer Führungsschienen in Höhenrichtung 13 verschiebbar gelagert ist. Weiters ist im Führungsgerüst 7 auch die Antriebseinheit 3 verbaut. Darüber hinaus kann das Führungsgerüst 7 in einfacher Art und Weise am Untergrund befestigt werden, um der Vorrichtung 1 die notwendige Stabilität zu verleihen.

Bei der Antriebseinheit 2 handelt es sich im vorliegenden Ausführungsbeispiel um eine elektrische Antriebseinheit, nämlich einen Linearmotor. Dieser eignet sich insbesondere dazu, die erforderlichen Beschleunigungen für den Simulationsvorgang zur Verfügung zu stellen.

Die bewegbare Plattform 2 dient im Anwendungszustand zur Aufnahme einer Person 12, welche den Bewegungsablauf eines Skispringers mit Hilfe der Vorrichtung 1 trainieren bzw. simulieren möchte. Dabei steht die Person 12 auf der Plattform 12 und nimmt vor dem Start der Simulation eine skisprungspezifische Anfahrtsposition ein.

Durch die Antriebseinheit 3 kann nun während eines Simulationsvorganges die Plattform 2 bewegt, insbesondere beschleunigt werden, sodass Beschleunigungs- und/oder Trägheitskräfte auf die Person 12 ausgeübt werden können.

Um nun aber die während der Anfahrt und der Radius-Kompression auf einen Skispringer wirkende Anpresskraft simulieren zu können, ist die Anpresseinrichtung 4 vorgesehen, die während der Beschleunigung der Plattform 2 nach oben die Anpresskraft auf die Person 12 ausüben kann und so die Kraft von der Plattform 2 auf die Person 12 überträgt. Demnach ist die Anpresseinrichtung 4 ausgebildet, um eine in Richtung der Plattform 2 wirkende Anpresskraft auf die Person 12 auszuüben.

Im vorliegenden Ausführungsbeispiel umfasst die Anpresseinrichtung 4 ein erstes Zugmittel 8, nämlich ein Zugseil, welches über eine Spanneinrichtung 9, nämlich eine Seilwinde, gespannt werden kann. Das erste Zugmittel 8 ist mit der auf der Plattform 2 befindlichen Person 12 verbunden, wobei das erste Zugmittel 8 beispielsweise an einem von der Person 12 angelegten Gurtsystem, etwa ein Gurtgeschirr, angebunden sein kann. Zum Zwecke der Anbindung des ersten Zugmittels 8 kann das Gurtsystem eine oder mehrere Umlenkrollen oder Ösen aufweisen, durch die das erste Zugmittel 8 geführt ist. In alternativen Ausführungsvarianten kann vorgesehen sein, dass zwei, drei oder mehr erste Zugmittel 8 vorgesehen sind.

Wie in Fig. 1 zu sehen, ist das erste Zugmittel 8 an einem Ende mit der Spanneinrichtung 9 verbunden, um die Spannung des ersten Zugmittels 8 mittels der Spanneinrichtung 9 einstellen zu können, und an dem anderen Ende an einem Fixierelement 17 befestigt, welches im vorliegenden Ausführungsbeispiel im Führungsgerüst 7 verankert ist. Durch die Verwendung der Spanneinrichtung 9 kann nun also das erste Zugmittel 8 gespannt werden, sodass eine in Richtung der Plattform 2 wirkende Anpresskraft auf die Person 12 ausgeübt werden kann. Bewegt sich nun die Plattform 2 nach oben, so erhöht sich die Anpresskraft, sofern die Spannung des ersten Zugmittels 8 mittels der Spanneinrichtung 9 aufrecht erhalten wird.

Während die Anpresseinrichtung 4 die Person 12 durch die Anpresskraft in Höhenrichtung 13 hinunter zieht, weist die Vorrichtung 1 weiters die Stabilisierungseinrichtung 5 auf, welche in Höhenrichtung 13 oberhalb der Plattform 2 bzw. oberhalb der Person 12 angeordnet ist. Durch die Stabilisierungseinrichtung 5 kann eine Stabilisierungskraft auf die Person 12 ausgeübt werden, welche von der Plattform 2 abgewandt ist und die Person 12 in Höhenrichtung 13 nach oben zieht. Entsprechend ist die Stabilisierungseinrichtung 5 ausgebildet, um eine der Anpresskraft entgegenwirkende Stabilisierungskraft auf die Person 12 auszuüben.

Im vorliegenden Ausführungsbeispiel umfasst die Stabilisierungseinrichtung 5 eine Stabilisierungsplatte 16, welche oberhalb des Führungsgerüsts 7 an einer Decke montiert ist, sowie zwei zweite elastische Zugmittel 15, welche einerseits an der Stabilisierungsplatte 16 und andererseits an der Person 12 befestigt sind. Bei den zweiten elastischen Zugmitteln 15 kann es sich beispielsweise um elastische Seile oder Expander handeln. Zur Fixierung der zweiten Zugmittel 15 an der Person 12 kann wiederum das von der Person 12 angelegte Gurtsystem dienen, wobei dieses im Rückenbereich entsprechende Öffnungen oder Ösen zur Befestigung der zweiten Zugmittel 15 aufweist. Mittels der Stabilisierungseinrichtung 5 kann die Person 12 einerseits in ihrer Haltung unterstützt bzw. geführt oder trainiert werden andererseits kann die Person 12 auch mittels der Stabilisierungseinrichtung 5 in einer Endphase des Simulationsvorganges gehalten und stabilisiert werden, um die Flugphase des Skisprungs zu simulieren.

Um die Richtungskomponenten der Stabilisierungskraft in einfacher Art und Weise an die Trainingssituation und die Person 12 anpassen zu können, ist die Stabilisierungsplatte 16 als Gitterplatte ausgebildet, welche eine Vielzahl von voneinander beabstandeten Befestigungspunkten zur Befestigung jeweils eines Endes der zweiten Zugmittel 15 aufweist. So können durch entsprechende Auswahl der Befestigungspunkte die Richtungskomponenten der Stabilisierungskraft, beispielsweise in einer normal auf die Höhenrichtung 13 ausgerichtete Querrichtung 14 oder in einer mit Höhenrichtung 13 und Querrichtung 14 ein orthogonales Bezugssystem bildenden Längsrichtung, beeinflusst und eingestellt werden. Dadurch, dass die zweiten Zugmittel 15 auch in Längsrichtung, sprich seitlich der Person 12, angebracht werden können, ist es vorteilhaft, wenn die zweiten Zugmittel 15 paarweise symmetrisch zur Sagittalebene der Person 12, sprich der menschlichen Symmetrieebene, verlaufend angeordnet sind.

Da durch die Simulationsvorrichtung 1 der Zeitpunkt des Absprunges simuliert werden kann und dadurch der entsprechende Bewegungsablauf für den optimalen Absprungzeitpunkt erlernbar sein soll, sorgt der Lösemechanismus 6 dafür, dass die Anpresskraft während des simulierten Absprungs zumindest verringert wird, wobei es vorteilhaft ist, wenn die Anpresskraft aufgehoben wird. Entsprechend wirken Anpresseinrichtung 4 und Antriebseinheit 3 derart zusammen, dass die Plattform 2 während eines Simulationsvorgangs beschleunigt wird und der Lösemechanismus 6 die Anpresskraft während der Bewegung der Plattform 2 zumindest verringert.

Dabei wirkt in dem Ausführungsbeispiel gemäß Fig. 1 der Lösemechanismus 6 direkt mit der Anpresseinrichtung 4 zusammen, wobei der Lösemechanismus 6 ausgebildet ist, um die Spannkraft des zumindest einen ersten Zugmittels 8 zu verringern.

Zu diesem Zweck ist das erste Zugmittel 8 mittels mehrerer als Umlenkrollen ausgebildeter Umlenkelemente 11 gegenüber einem direkten Verlauf zwischen Person 12 und Fixierelement 17 ausgelenkt, wobei der Lösemechanismus 6 ein betätigbares Auslöseelement 10 umfasst, wobei eines der Umlenkelemente 11 am Auslöseelement 10 angebracht ist. Die Auslenkung des ersten Zugmittels 8 erfolgte dabei im Wesentlichen durch die Beabstandung des Auslöseelements 10 von der Spanneinrichtung 9 in Querrichtung 14. Bei der Betätigung des Auslöseelements 10 wird nun das erste Zugmittel 8 freigegeben, entweder durch Lösung des Umlenkelements 11 vom Auslöseelement 10 oder durch Freigabe des ersten Zugmittels durch Öffnung des Umlenkelements 11, sodass das freigegebene erste Zugmittel 8 in Richtung der Spanneinrichtung 9 schnellt und die vom gespannten ersten Zugmittel 8 auf die Person 12 ausgeübte Anpresskraft schlagartig verringert wird bzw. ganz aufgehoben wird. Dadurch kann nach der Betätigung des Lösemechanismus 6 ein Absprung simuliert werden, da die Person 12 schwächer oder nicht mehr von der Anpresskraft nach unten in Richtung der Plattform 2 gezogen wird. Wird nun die Plattform 2 gebremst oder in ihrer nach oben gerichteten Bewegung gestoppt, so kann die Person 12 aufgrund der Trägheitskräfte von der Plattform 2 abheben und - wie bereits zuvor geschildert - von der Stabilisierungseinrichtung 5 gehalten und stabilisiert werden.

Im vorliegenden Ausführungsbeispiel umfasst der Lösemechanismus 6 ein Gehäuse 18, in welchem das erste Zugmittel 8 ausgelenkt wird und das Auslöseelement 10 angeordnet ist. In alternativen Ausführungsvarianten kann der Lösemechanismus 6 auch im Führungsgerüst 7 selbst untergebracht sein.

Um die Bewegungsabläufe möglichst realitätsnah gestalten zu können und in Abhängigkeit der Bewegungs- und Beschleunigungsabläufe der Plattform 2 den entsprechenden Zeitpunkt für die Auslösung des Lösemechanismus 6 definieren zu können, ist im vorliegenden Ausführungsbeispiel vorgesehen, dass eine Zeitspanne zwischen dem Start der Bewegung der Plattform 2 am Beginn des Simulationsvorganges und dem Auslösezeitpunkt, an welchem das Auslöseelement 10 betätigt wird und die Spannkraft des ersten Zugmittels 8 verringert, einstellbar und variierbar ist. Dies kann beispielsweise dadurch erreicht werden, dass Antriebseinheit 3 und Lösemechanismus 6 mit einer Steuereinrichtung verbunden sind, welche die Bewegungsabläufe der Plattform 2 sowie die Aktuierung des Auslöseelements 10 steuert.

Ferner kann vorgesehen sein, dass die Plattform 2 oder Aufsätze für die Plattform 2 eine Neigung aufweisen, um unterschiedliche Bewegungsabläufe zu simulieren. Beispielsweise kann die Plattform 2 selbst um eine Längsachse oder eine Querachse geneigt sein oder kann ein auf der Plattform 2 befindlicher Aufsatz um die Längsachse oder die Querachse geneigt sein.

Zusätzlich kann auch eine nicht dargestellte Anzeigeeinheit vorgesehen sein, mittels welcher der Person 12 Informationen, beispielsweise über den optimalen Absprungzeitpunkt, angezeigt werden können, wobei die Anzeigeeinheit vorteilhafter Weise ebenfalls mit der Steuereinrichtung verbunden ist.

### FUNKTIONSWEISE DER ERFINDUNG

Ein mittels der zuvor beschriebenen Vorrichtung 1 durchgeführter Simulationsvorgang läuft wie folg ab:
Zuerst stellt sich die Person 12 auf die Plattform 2, welche sich in einer Ausgangsstellung befindet. Die Ausgangsstellung stellt dabei in der Regel die tiefste Position der Plattform 2 während des Simulationsvorganges dar.

Vorzugsweise legt die Person 12 ein Gurtsystem, etwa ein Gurtgeschirr, an, über welches Gurtsystem die Person 12 einerseits im Rückenbereich an die Stabilisierungseinrichtung 5 angebunden wird und andererseits im Bauch- oder Brustbereich an die Anpresseinrichtung 4 angebunden wird. Im vorliegenden Ausführungsbeispiel werden zu diesem Zwecke einerseits die mit einem ihrer Enden bereits an der Stabilisierungsplatte 16 befestigten zweiten Zugmittel 15 am Gurtsystem befestigt und wird andererseits das erste Zugmittel 9 durch eine Umlenkrolle des Gurtsystems geführt.

Danach nimmt die Person 12 eine skisprungspezifische Anfahrtshaltung ein und die Anpresskraft wird durch Betätigung der Spanneinrichtung 9 eingestellt. Da die Stabilisierungseinrichtung 5 die Person 12 in der Ausgangsstellung durch die elastisch ausgebildeten zweiten Zugmittel 9 nach oben in Richtung der Stabilisierungsplatte 16 zieht, also eine Stabilisierungskraft ausübt, wird die Anpresskraft mittels der Spanneinrichtung 9 so eingestellt, dass sich die parallel zur Höhenrichtung 13 ausgerichteten Kraftkomponenten von Anpresskraft und Stabilisierungskraft gegenseitig aufheben.

Nachfolgend wird der Simulationsvorgang gestartet, indem die Plattform 2 mittels der Antriebseinheit 3 in Höhenrichtung 13 nach oben beschleunigt wird. Dadurch wird die Anpresskraft, wie bei der Anfahrt und der Radius-Kompression eines Skispringers auf einer Schanze, erhöht, wobei die Person 12 versucht die jeweils optimale Körperposition beizubehalten. Zum Auslösezeitpunkt, welcher den Zeitpunkt des Absprunges des Skispringers vom Schanzentisch simuliert, wird die Spannkraft des ersten Zugmittels 8 durch Betätigung des Auslöseelements 10 des Lösemechanismus 6 verringert, sodass sich die von der Anpresseinrichtung 4 ausgeübte Anpresskraft schlagartig verringert und die Person 12 eine Absprung-Körperhaltung einnehmen kann, wobei sie sich idealerweise von der Plattform 2 abstößt und von der Stabilisierungseinrichtung 5 stabilisiert bzw. gehalten wird.

Wird nach dem Auslösezeitpunkt die Plattform 2 gebremst bzw. die Bewegung der Plattform 2 gestoppt, so kann sich die Person 12 von der Plattform 2 lösen und wird ausschließlich durch die Stabilisierungseinrichtung 5 gehalten, was dem Beginn der Flugphase eines Skispringers entspricht.

So kann durch die Verwendung der erfindungsgemäßen Vorrichtung 1 in einfacher Art und Weise der gesamte Bewegungsablaufs eines Skispringers während der Anfahrt, der Radius-Kompression, des Absprunges und des Beginns der Flugphase simuliert werden, wobei realitätsnahe Kräfteverhältnisse auf die Person 12 einwirken.

### BEZUGSZEICHENLISTE

- 1: Vorrichtung
- 2: Plattform
- 3: Antriebseinheit
- 4: Anpresseinrichtung
- 5: Stabilisierungseinrichtung
- 6: Lösemechanismus
- 7: Führungsgerüst
- 8: erstes Zugmittel
- 9: Spanneinrichtung
- 10: Auslöseelement
- 11: Umlenkelement
- 12: Person
- 13: Höhenrichtung
- 14: Querrichtung
- 15: zweites Zugmittel
- 16: Stabilisierungsplatte
- 17: Fixierelement
- 18: Gehäuse

## Patentansprüche

1. Vorrichtung (1) zur Simulation eines Bewegungsablaufes eines Skispringers umfassend
- eine mittels einer Antriebseinheit (3) in einer Höhenrichtung (13) verfahrbare Plattform (2) zur Aufnahme einer Person (12);
- eine Anpresseinrichtung (4), welche ausgebildet ist, um eine in Richtung der Plattform (2) wirkende Anpresskraft auf eine auf der Plattform (2) befindliche Person auszuüben;
- eine Stabilisierungseinrichtung (5), welche ausgebildet ist, um eine der Anpresskraft entgegen wirkende Stabilisierungskraft auf die auf der Plattform (2) befindliche Person (12) auszuüben;
**dadurch gekennzeichnet, dass**
die Anpresseinrichtung (4) zumindest ein erstes Zugmittel (8) zur Ausübung der Anpresskraft sowie eine Spanneinrichtung (9) für das zumindest eine erste Zugmittel (8) umfasst, wobei Antriebseinheit (3) und Anpresseinrichtung (4) derart zusammenwirken,
- sodass während eines Simulationsvorganges die Plattform (2) mittels der Antriebseinheit (3) in Richtung der Höhenrichtung (13) beschleunigt wird, wobei die von der Anpresseinrichtung (4) ausgeübte Anpresskraft während der Bewegung der Plattform (2) in Richtung der Höhenrichtung (13) über einen Lösemechanismus (6) zumindest verringert wird, wobei der Lösemechanismus (6) ausgebildet ist, um mit dem zumindest einen ersten Zugmittel (8) und/oder mit der Spanneinrichtung (9) derart zusammenzuwirken, dass bei Betätigung des Lösemechanismus (6) eine Spannkraft des ersten Zugmittels (8) verringert wird,
- und sodass nach der Verringerung der Anpresskraft die Person (12) durch die Stabilisierungseinrichtung (5) in einer stabilen Lage gehalten wird.

2. Vorrichtung (1) nach Anspruch 1, **dadurch gekennzeichnet, dass** Anpresseinrichtung (4) und Lösemechanismus (6) derart ausgebildet sind, dass eine Zeitdauer zwischen einem Startzeitpunkt des Simulationsvorgangs und einem Auslösezeitpunkt des Simulationsvorganges, an welchem Auslösezeitpunkt die von der Anpresseinrichtung (4) ausgeübte Anpresskraft über den Lösemechanismus (6) zumindest verringert wird, einstellbar ist.

3. Vorrichtung (1) nach einem der Ansprüche 1 bis 2, **dadurch gekennzeichnet, dass** die Vorrichtung (1) ein Führungsgerüst (7) aufweist, wobei die Plattform (2) in dem Führungsgerüst (7) verschiebbar gelagert ist und vorzugsweise die Antriebseinheit (3) in dem Führungsgerüst (7) verbaut ist.

4. Vorrichtung (1) nach einem der Ansprüche 1 bis 3, **dadurch gekennzeichnet, dass** die Vorrichtung (1) ein von der auf der Plattform (2) befindlichen Person (12) anlegbares Gurtsystem umfasst, wobei das Gurtsystem mit der Anpresseinrichtung (4) und/oder der Stabilisierungseinrichtung (5) verbunden ist, um die Anpresskraft und/oder die Stabilisierungskraft auf die auf der Plattform (2) befindliche Person (12) zu übertragen.

5. Vorrichtung (1) nach einem der Ansprüche 1 bis 4, **dadurch gekennzeichnet, dass** der Lösemechanismus (6) ein in einer Richtung quer, vorzugsweise normal, zur
Höhenrichtung (13) ausgerichteten Querrichtung (14) von der Spanneinrichtung (9) beabstandetes betätigbares Auslöseelement (10) umfasst,
wobei das Auslöseelement (10) ein Umlenkelement (11) für das zumindest eine erste Zugmittel (8) aufweist und ausgebildet ist, um bei Betätigung des
Auslöseelements (10) das Umlenkelement (11) oder das zumindest eine erste Zugmittel (8) freizugeben.

6. Vorrichtung (1) nach einem der Ansprüche 1 bis 5, **dadurch gekennzeichnet, dass** die Stabilisierungseinrichtung (5) eine von der Plattform (2) in Höhenrichtung (13) beabstandete Stabilisierungsplatte (16) sowie zumindest ein an der Stabilisierungsplatte (16) befestigbares zweites Zugmittel (15) zur Ausübung der Stabilisierungskraft umfasst.

7. Vorrichtung (1) nach Anspruch 6, **dadurch gekennzeichnet, dass** die Stabilisierungsplatte (16) eine Vielzahl von in Bezug auf die Plattform (2) zueinander versetzten Befestigungspunkten zur Anbindung des zumindest einen zweiten Zugmittels (15) aufweist.

8. Vorrichtung (1) nach einem der Ansprüche 1 bis 7, **dadurch gekennzeichnet, dass** die Anpresseinrichtung (4) und die Stabilisierungseinrichtung (5) derart einstellbar sind, dass in einer Ausgangsstellung der Plattform (2) zumindest die parallel zur Höhenrichtung (13) ausgerichteten Kraftkomponenten von Anpresskraft und Stabilisierungskraft im Wesentlichen ausgeglichen werden.

9. Vorrichtung (1) nach einem der Ansprüche 1 bis 8, **dadurch gekennzeichnet, dass** mittels der Plattform (2) verschiedene Neigungswinkel einstellbar sind, um unterschiedliche Bewegungsabläufe zu simulieren.

10. Vorrichtung (1) nach einem der Ansprüche 1 bis 9, **dadurch gekennzeichnet, dass** die Vorrichtung (1) eine Steuereinrichtung zur Steuerung der Antriebseinheit (3) und/oder des Lösemechanismus (6) aufweist.

11. Vorrichtung (1) nach einem der Ansprüche 1 bis 10,
**dadurch gekennzeichnet, dass** die Vorrichtung (1) eine Anzeigeeinheit zur Anzeige von Informationen für die auf der Plattform (2) befindliche Person (12) aufweist, wobei die Anzeigeeinheit vorzugsweise mit der Steuereinrichtung verbunden ist.

12. Verfahren zur Simulation eines Bewegungsablaufes eines Skispringers mittels einer, vorzugsweise nach einem der Ansprüche 1 bis 11 ausgebildeten, Vorrichtung umfassend
- eine Plattform (2),
- eine Anpresseinrichtung (4),
- eine Stabilisierungseinrichtung (5) und
- einen Lösemechanismus (6),
wobei die Anpresseinrichtung (4) zumindest ein erstes Zugmittel (8) und eine Spanneinrichtung (9) umfasst, wobei mittels des Verfahrens folgende Schritte ausgeführt werden:
- Positionieren einer Person (12) auf einer in einer Höhenrichtung (13) verfahrbaren Plattform (2);
- Anbinden der Person (12) an eine Anpresseinrichtung (4) und eine Stabilisierungseinrichtung (5), wobei durch die Anpresseinrichtung (4) eine in Richtung der Plattform (2) wirkende Anpresskraft auf die Person (12) ausgeübt wird und mittels der Stabilisierungseinrichtung (5) eine der Anpresskraft entgegen wirkende Stabilisierungskraft auf die Person (12) ausgeübt wird;
- Beschleunigen der Plattform (2) in Richtung der Höhenrichtung (13);
- Verringern, vorzugsweise Lösen, der Anpresskraft während der Bewegung der Plattform (2) in Richtung der Höhenrichtung (13) durch Zusammenwirken des Lösemechanismus (6) mit dem ersten Zugmittel (8) und/oder mit der Spanneinrichtung (9), indem eine Spannkraft des ersten Zugmittels (8) verringert wird;
- Stabilisieren der Person (12) mittels der Stabilisierungseinrichtung (5).

## Claims

1. Device (1) for simulating a movement sequence of a ski jumper, comprising
- a platform (2) for accommodating a person (12), which platform (2) is movable in a height direction (13) by means of a drive unit (3);
- a pressing device (4) which is designed to exert a pressing force acting in the direction of the platform (2) on a person located on the platform (2);
- a stabilizing device (5) which is designed to exert a stabilizing force counteracting the pressing force on the person (12) located on the platform (2);
**characterized in that**
the pressing device (4) comprises at least one first traction means (8) for exerting the pressing force as well as a tensioning device (9) for the at least one first traction means (8), wherein the drive unit (3) and the pressing device (4) interact in such a manner
- so that during a simulation process the platform (2) is accelerated by means of the drive unit (3) in the direction of the height direction (13), wherein the pressing force exerted by the pressing device (4) is at least reduced during the movement of the platform (2) in the direction of the height direction (13) via a release mechanism (6), wherein the release mechanism (6) is designed to interact with the at least one first traction means (8) and/or with the tensioning device (9) in such a way that, when the release mechanism (6) is actuated, a tensioning force of the first traction means (8) is reduced,
- and so that, after the reduction of the pressing force, the person (12) is held in a stable position by the stabilizing device (5).

2. Device (1) according to claim 1, **characterized in that** the pressing device (4) and release mechanism (6) are designed in such a way that a time period between a start time of the simulation process and a release time of the simulation process, at which release time the pressing force exerted by the pressing device (4) is at least reduced via the release mechanism (6), can be set.

3. Device (1) according to one of claims 1 to 2, **characterized in that** the device (1) has a guide frame (7), wherein the platform (2) is displaceably mounted in the guide frame (7) and preferably the drive unit (3) is installed in the guide frame (7).

4. Device (1) according to one of claims 1 to 3, **characterized in that** the device (1) comprises a belt system which can be applied by the person (12) located on the platform (2), wherein the belt system is connected to the pressing device (4) and/or the stabilizing device (5) in order to transmit the pressing force and/or the stabilizing force to the person (12) located on the platform (2).

5. Device (1) according to one of claims 1 to 4, **characterized in that** the release mechanism (6) comprises an actuatable release element (10) spaced apart from the tensioning device (9) in a direction transverse, preferably normal, to the height direction (13), wherein the release element (10) has a deflection element (11) for the at least one first traction means (8) and is designed to release the deflection element (11) or the at least one first traction means (8) when the release element (10) is actuated.

6. Device (1) according to one of claims 1 to 5, **characterized in that** the stabilizing device (5) comprises a stabilizing plate (16) spaced apart from the platform (2) in the height direction (13) and at least one second traction means (15) which can be fastened to the stabilizing plate (16) for exerting the stabilizing force.

7. Device (1) according to claim 6, **characterized in that** the stabilizing plate (16) has a plurality of fastening points offset with respect to one another in relation to the platform (2) for connecting the at least one second traction means (15).

8. Device (1) according to one of claims 1 to 7, **characterized in that** the pressing device (4) and the stabilizing device (5) are adjustable in such a way that in a starting position of the platform (2) at least the force components of pressing force and stabilizing force aligned parallel to the height direction (13) are substantially balanced.

9. Device (1) according to one of claims 1 to 8, **characterized in that** different angles of inclination can be set by means of the platform (2) in order to simulate different movement sequences.

10. Device (1) according to one of claims 1 to 9, **characterized in that** the device (1) has a control device for controlling the drive unit (3) and/or the release mechanism (6).

11. Device (1) according to one of claims 1 to 10, **characterized in that** the device (1) has a display unit for displaying information for the person (12) located on the platform (2), wherein the display unit is preferably connected to the control device.

12. Method for simulating a movement sequence of a ski jumper by means of a device, preferably designed according to one of claims 1 to 11, comprising
- a platform (2)
- a pressing device (4)
- a stabilizing device (5) and
- a release mechanism (6),
wherein the pressing device (4) comprises at least a first traction means (8) and a tensioning device (9), wherein by means of the method the following steps are carried out:
- positioning a person (12) on a platform (2) movable in a height direction (13);
- connecting the person (12) to a pressing device (4) and a stabilizing device (5), wherein a pressing force acting in the direction of the platform (2) is exerted on the person (12) by the pressing device (4) and a stabilizing force counteracting the pressing force is exerted on the person (12) by means of the stabilizing device (5);
- accelerating the platform (2) in the direction of the height direction (13);
- reducing, preferably releasing, the pressing force during the movement of the platform (2) in the direction of the height direction (13) by interaction of the release mechanism (6) with the first traction means (8) and/or with the tensioning device (9) by reducing a tensioning force of the first traction means (8);
- stabilizing the person (12) by means of the stabilizing device (5).

## Revendications

1. Dispositif (1) pour simuler une séquence de mouvements d'un sauteur à skis, comprenant
- une plate-forme (2) déplaçable au moyen d'une unité d'entraînement (3) dans une direction verticale (13) et destinée à recevoir une personne (12) ;
- une installation d'appui (4) conçue pour exercer une force d'appui agissant en direction de la plate-forme (2) sur une personne se trouvant sur la plate-forme (2) ;
- une installation de stabilisation (5) conçue pour exercer une force de stabilisation opposée à la force d'appui sur la personne (12) se trouvant sur la plate-forme (2) ;
**caractérisé en ce que** l'installation d'appui (4) comporte au moins un premier moyen de traction (8) pour exercer la force d'appui ainsi qu'une installation de mise en tension (9) pour l'au moins un premier moyen de traction (8), l'unité d'entraînement (3) et l'installation d'appui (4) coopérant de telle manière que,
- pendant un processus de simulation, la plate-forme (2) soit accélérée au moyen de l'unité d'entraînement (3) dans la direction verticale (13), la force d'appui exercée par l'installation d'appui (4) étant au moins réduite pendant le déplacement de la plate-forme (2) dans la direction verticale (13) par un mécanisme de libération (6), lequel mécanisme de libération (6) est conçu pour coopérer avec l'au moins un premier moyen de traction (8) et/ou avec l'installation de mise en tension (9) de telle manière que lorsque le mécanisme de libération (6) est actionné, une force de tension du premier moyen de traction (8) est réduite,
- et qu'après la réduction de la force d'appui, la personne (12) soit retenue dans une position stable par l'installation de stabilisation (5).

2. Dispositif (1) selon la revendication 1, **caractérisé en ce que** l'installation d'appui (4) et le mécanisme de libération (6) sont conformés de telle manière qu'un temps écoulé entre un instant de début du processus de simulation et un instant de déclenchement du processus de simulation auquel la force d'appui exercée par l'installation d'appui (4) est au moins réduite par le mécanisme de libération (6) soit réglable.

3. Dispositif (1) selon l'une des revendications 1 à 2, **caractérisé en ce que** le dispositif (1) possède un châssis de guidage (7), la plate-forme (2) étant supportée avec possibilité de translation dans le châssis de guidage (7) et l'unité d'entraînement (3) étant de préférence intégrée dans le châssis de guidage (7).

4. Dispositif (1) selon l'une des revendications 1 à 3, **caractérisé en ce que** le dispositif (1) comprend un système de sangles pouvant être appliqué sur la personne (12) qui se trouve sur la plate-forme (2), lequel système de sangles est relié à l'installation d'appui (4) et/ou à l'installation de stabilisation (5) pour transmettre la force d'appui et/ou la force de stabilisation à la personne (12) qui se trouve sur la plate-forme (2).

5. Dispositif (1) selon l'une des revendications 1 à 4, **caractérisé en ce que** le mécanisme de libération (6) comprend un élément déclencheur (10) disposé à distance de l'installation de mise en tension (9) dans une direction transversale (14) disposée transversalement, de préférence perpendiculairement, par rapport à la direction verticale (13), lequel élément déclencheur (10) comprend un élément de déviation (11) pour l'au moins un premier moyen de traction (8) et est conçu pour débloquer l'élément de déviation (11) ou l'au moins un premier moyen de traction (8) lors de l'actionnement de l'élément déclencheur (10).

6. Dispositif (1) selon l'une des revendications 1 à 5, **caractérisé en ce que** l'installation de stabilisation (5) comprend une plaque de stabilisation (16) écartée de la plate-forme (2) dans la direction verticale (13) et au moins un deuxième moyen de traction (15) pouvant être fixé sur la plaque de stabilisation (16) et destiné à exercer la force de stabilisation.

7. Dispositif (1) selon la revendication 6, **caractérisé en ce que** la plaque de stabilisation (16) comprend un grand nombre de points de fixation décalés les uns par rapport aux autres par rapport à la plate-forme (2) pour attacher l'au moins un deuxième moyen de traction (15).

8. Dispositif (1) selon l'une des revendications 1 à 7, **caractérisé en ce que** l'installation d'appui (4) et l'installation de stabilisation (5) sont réglables de telle manière que dans une position de départ de la plate-forme (2), les composantes de la force d'appui et de la force de stabilisation orientées parallèlement à la direction verticale (13), au minimum, soient pour l'essentiel compensées.

9. Dispositif (1) selon l'une des revendication 1 à 8, **caractérisé en ce que** différents angles d'inclinaison peuvent être réglés au moyen de la plate-forme (2) afin de simuler différentes séquences de mouvements.

10. Dispositif (1) selon l'une des revendication 1 à 9, **caractérisé en ce que** le dispositif (1) comporte une installation de commande destinée à commander l'unité d'entraînement (3) et/ou le mécanisme de libération (6).

11. Dispositif (1) selon l'une des revendications 1 à 10, **caractérisé en ce que** le dispositif (1) comporte une unité d'affichage pour l'affichage d'informations destinées à la personne (12) qui se trouve sur la plate-forme (2), laquelle unité d'affichage communique de préférence avec l'installation de commande.

12. Procédé pour simuler une séquence de mouvements d'un sauteur à skis au moyen d'un dispositif, de préférence conçu selon l'une des revendications 1 à 11, comprenant
- une plate-forme (2),
- une installation d'appui (4),
- une installation de stabilisation (5) et
- un mécanisme de libération (6),
dans lequel l'installation d'appui (4) comporte au moins un premier moyen de traction (8) et une installation de mise en tension (9), les étapes suivantes pouvant être exécutées au moyen du procédé :
- placement d'une personne (12) sur une plate-forme (2) déplaçable dans une direction verticale (13) ;
- rattachement de la personne (12) à une installation d'appui (4) et à une installation de stabilisation (5), l'installation d'appui (4) exerçant sur la personne (12) une force d'appui agissant dans la direction de la plate-forme (2) et l'installation de stabilisation (5) exerçant sur la personne (12) une force de stabilisation opposée à la force d'appui ;
- accélération de la plate-forme (2) dans la direction verticale (13) ;
- réduction, de préférence abolition, de la force d'appui pendant le mouvement de la plate-forme (2) dans la direction verticale (13) par la coopération du mécanisme de libération (6) avec le premier moyen de traction (8) et/ou avec l'installation de mise en tension (9) par la réduction d'une force de tension du premier moyen de traction (8) ;
- stabilisation de la personne (12) au moyen de l'installation de stabilisation (5).
